# EUROPEAN PATENT APPLICATION

(11) **EP 4 345 484 A1**
(43) Date of publication of application: **03.04.2024**
(21) Application number: 23191974.7
(22) Date of filing: 17.08.2023
(51) Int. Cl.: G01S 5/00, G01S 5/02, H04W 64/00, H04W 92/18

(54) **METHOD, APPARATUS AND COMPUTER PROGRAM**

(30) Priority: 28.09.2022 GB 202214199
(71) Applicant: Nokia Technologies Oy, 02610 Espoo (FI)
(72) Inventor: MICHALOPOULOS, Diomidis, Munich (DE); BARBU, Oana-Elena, Aalborg (DK); KESHAVAMURTHY, Prajwal, Munich (DE)
(74) Representative: Nokia EPO representatives

(57) **Abstract**

There is provided a first device comprising: means for establishing a first positioning session between the first device and a third device; and means for causing sending, from the first device to a second device, positioning assistance data comprising information associated with a configuration of the first positioning session.

## Description

### FIELD

The present application relates to a method, apparatus, system and computer program and in particular but not exclusively to establishing a positioning session.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to an aspect, there is provided a first device comprising: means for establishing a first positioning session between the first device and a third device; and means for causing sending, from the first device to a second device, positioning assistance data comprising information associated with a configuration of the first positioning session.

The first device may comprise: means for determining that a trigger condition is satisfied, wherein causing the sending may be performed based on determining that the trigger condition is satisfied.

The means for determining that the trigger condition is satisfied may comprise means for causing receiving, from the third device or the second device, a request for the positioning assistance data.

The means for determining that the trigger condition is satisfied may comprise means for causing receiving, from the second device, the request for the positioning assistance data, and wherein the first device may further comprise: means for causing sending, to the third device, a permission request for providing the positioning assistance data to the second device; means for causing receiving, from the third device, a response indicating that the permission request is granted; and means for causing sending the positioning assistance data based on receiving the response indicating that the permission request is granted.

The information associated with the configuration of the first positioning session may comprise a most recent positioning reference signal configuration used for the first positioning session.

The information associated with the configuration of the first positioning session may comprise information identifying a set of one or more third devices including the third device and a set of one or more positioning reference units associated with the first positioning session.

Causing sending the information identifying the set of one or more third devices including the third device and the set of one or more positioning reference units associated with the first positioning session may comprise causing sending information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Causing sending the positioning assistance data may further comprise causing sending at least one of: one or more performance indicators associated with the first positioning session; an estimated time for the second device to set up a second positioning session based on the positioning assistance information; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; or mobility information associated with the third device.

Causing sending the positioning assistance data may further comprise causing sending one or more conditions of when the positioning assistance data can be used by the second device.

According to an aspect there is provided a second device comprising: means for causing receiving, at the second device from a first device associated with a first positioning session between the first device and a third device, positioning assistance data comprising information associated with a configuration of the first positioning session; means for establishing a second positioning session between the second device and the third device based, at least in part, on the positioning assistance data, wherein a configuration of the second positioning session is based, at least in part, on the information associated with the configuration of the first positioning session.

The second device may comprise: means for causing sending, to the first device, a request for providing the positioning assistance data to the second device.

The positioning assistance data may comprise a most recent positioning reference signal configuration used for the first positioning session.

Causing receiving the positioning assistance data may further comprise causing receiving information identifying a set of one or more third devices including the third device and a set of one or more positioning reference units associated with the first positioning session.

Causing receiving the information identifying the set of one or more third devices including the third device and the set of one or more positioning reference units associated with the first positioning session may comprise causing receiving information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Causing receiving the positioning assistance data may further comprise causing receiving at least one of: one or more performance indicators associated with the first positioning session; an estimated time for the second device to set up the second positioning session; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; and mobility information associated with the third device.

Determining whether the positioning assistance data applies to the second device may comprise: comparing the one or more performance indicators against expected values; or comparing information indicating an area in which the first device is located with information indicating an area in which the second device is located.

Causing receiving the positioning assistance data may further comprise causing receiving one or more conditions of when the positioning assistance data can be used by the second device, and wherein establishing the positioning session is performed based on determining that the one or more conditions are satisfied.

The second device may comprise: means for determining that the configuration of the second positioning session comprises a modification to the configuration of the first positioning session; and wherein establishing the second positioning session may comprise causing sending an indication of the modification to the third device.

According to an aspect there is provided a third device comprising: means for establishing a first positioning session between the third device and a first device; and means for establishing a second positioning session between the third device and a second device, wherein a configuration of the second positioning session comprises at least part of a configuration of the first positioning session.

The third device may comprise: means for causing sending, to the first device, a request to provide positioning assistance data to the second device.

The request may comprise an indication in a positioning reference signal.

The third device may comprise: means for causing receiving, from the first device, a permission request for providing the positioning assistance data to the second device; means for determining to grant the permission request; and means for causing, based on the determining, sending, to the first device, a response indicating that the permission request is granted.

The means for establishing the second positioning session may comprise: means for causing receiving, from the second device, an indication of a modification to the configuration of the first positioning session; and means for establishing the second positioning based on the first positioning session and the indication.

According to an aspect, there is provided a first device comprising at least one processor and at least one memory storing instructions that, when executed by the at least one processor, cause the first device at least to: establish a first positioning session between the first device and a third device; and send, from the first device to a second device, positioning assistance data comprising information associated with a configuration of the first positioning session.

The at least one memory may store instructions that, when executed by the at least one processor, may cause the first device to: determine that a trigger condition is satisfied, wherein the at least one processor may send the positioning assistance data based on determining that the trigger condition is satisfied.

The at least one memory may store instructions that, when executed by the at least one processor, may cause the first device to determine that the trigger condition is satisfied based on receiving, from the third device or the second device, a request for the positioning assistance data.

The at least one memory may store instructions that, when executed by the at least one processor, may cause the first device to determine that the trigger condition is satisfied based on receiving, from the second device, the request for the positioning assistance data, and wherein the at least one memory may store instructions that, when executed by the at least one processor, may cause the first device to: send, to the third device, a permission request for providing the positioning assistance data to the second device; receive, from the third device, a response indicating that the permission request is granted; and send the positioning assistance data based on receiving the response indicating that the permission request is granted.

The information associated with the configuration of the first positioning session may comprise a most recent positioning reference signal configuration used for the first positioning session.

The information associated with the configuration of the first positioning session may comprise information identifying a set of one or more third devices including the third device and a set of one or more positioning reference units associated with the first positioning session.

The at least one memory may store instructions that, when executed by the at least one processor, may cause the first device to send information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

The at least one memory may store instructions that, when executed by the at least one processor, may cause the first device to send at least one of: one or more performance indicators associated with the first positioning session; an estimated time for the second device to set up a second positioning session based on the positioning assistance information; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; or mobility information associated with the third device.

The at least one memory may store instructions that, when executed by the at least one processor, may cause the first device to send one or more conditions of when the positioning assistance data can be used by the second device.

According to an aspect, there is provided a second device comprising at least one processor and at least one memory storing instructions that, when executed by the at least one processor, cause the second device at least to: receive, at the second device from a first device associated with a first positioning session between the first device and a third device, positioning assistance data comprising information associated with a configuration of the first positioning session; establish a second positioning session between the second device and the third device based, at least in part, on the positioning assistance data, wherein a configuration of the second positioning session is based, at least in part, on the information associated with the configuration of the first positioning session.

The at least one memory may store instructions that, when executed by the at least one processor, may cause the second device to: send, to the first device, a request for providing the positioning assistance data to the second device.

The positioning assistance data may comprise a most recent positioning reference signal configuration used for the first positioning session.

The at least one memory may store instructions that, when executed by the at least one processor, may cause the second device receive information identifying a set of one or more third devices including the third device and a set of one or more positioning reference units associated with the first positioning session.

The at least one memory may store instructions that, when executed by the at least one processor, may cause the second device to receive information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

The at least one memory may store instructions that, when executed by the at least one processor, may cause the second device to receive at least one of: one or more performance indicators associated with the first positioning session; an estimated time for the second device to set up the second positioning session; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; and mobility information associated with the third device.

The at least one memory may store instructions that, when executed by the at least one processor, may cause the second device to determine whether the positioning assistance data applies to the second device based on: comparing the one or more performance indicators against expected values; or comparing information indicating an area in which the first device is located with information indicating an area in which the second device is located.

The at least one memory may store instructions that, when executed by the at least one processor, may cause the second device to receive one or more conditions of when the positioning assistance data can be used by the second device, and wherein the at least one memory may store instructions that, when executed by the at least one processor, may cause the second device to establish the positioning session based on determining that the one or more conditions are satisfied.

The at least one memory may store instructions that, when executed by the at least one processor, may cause the second device to determine that the configuration of the second positioning session comprises a modification to the configuration of the first positioning session; and wherein the at least one memory may store instructions that, when executed by the at least one processor, may cause the second device to establish the second positioning session based on sending an indication of the modification to the third device.

According to an aspect, there is provided a third device comprising at least one processor and at least one memory storing instructions that, when executed by the at least one processor, cause the third device at least to: means for establishing a first positioning session between the third device and a first device; and means for establishing a second positioning session between the third device and a second device, wherein a configuration of the second positioning session comprises at least part of a configuration of the first positioning session.

The at least one memory may store instructions that, when executed by the at least one processor, may cause the third device to send, to the first device, a request to provide positioning assistance data to the second device.

The request may comprise an indication in a positioning reference signal.

The at least one memory may store instructions that, when executed by the at least one processor, may cause the third device to: receive, from the first device, a permission request for providing the positioning assistance data to the second device; determine to grant the permission request; and, based on the determining, send, to the first device, a response indicating that the permission request is granted.

The at least one memory may store instructions that, when executed by the at least one processor, may cause the third device to: receive, from the second device, an indication of a modification to the configuration of the first positioning session; and establish the second positioning based on the first positioning session and the indication.

According to an aspect, there is provided a method comprising: establishing a first positioning session between a first device and a third device; and sending, from the first device to a second device, positioning assistance data comprising information associated with a configuration of the first positioning session.

The method may comprise determining that a trigger condition is satisfied, wherein the sending may be performed based on determining that the trigger condition is satisfied.

Determining that the trigger condition is satisfied may comprise receiving, from the third device or the second device, a request for the positioning assistance data.

Determining that the trigger condition is satisfied may comprise receiving, from the second device, the request for the positioning assistance data, and wherein the method may further comprise: sending, to the third device, a permission request for providing the positioning assistance data to the second device; receiving, from the third device, a response indicating that the permission request is granted; and sending the positioning assistance data based on receiving the response indicating that the permission request is granted.

The information associated with the configuration of the first positioning session may comprise a most recent positioning reference signal configuration used for the first positioning session.

The information associated with the configuration of the first positioning session may comprise information identifying a set of one or more third devices including the third device and a set of one or more positioning reference units associated with the first positioning session.

Sending the information identifying the set of one or more third devices including the third device and the set of one or more positioning reference units associated with the first positioning session may comprise sending information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Sending the positioning assistance data may further comprise sending at least one of: one or more performance indicators associated with the first positioning session; an estimated time for the second device to set up a second positioning session based on the positioning assistance information; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; or mobility information associated with the third device.

Sending the positioning assistance data may further comprise sending one or more conditions of when the positioning assistance data can be used by the second device.

According to an aspect there is provided a method comprising: receiving, at a second device from a first device associated with a first positioning session between the first device and a third device, positioning assistance data comprising information associated with a configuration of the first positioning session; establishing a second positioning session between the second device and the third device based, at least in part, on the positioning assistance data, wherein a configuration of the second positioning session is based, at least in part, on the information associated with the configuration of the first positioning session.

The method may comprise: sending, to the first device, a request for providing the positioning assistance data to the second device.

The positioning assistance data may comprise a most recent positioning reference signal configuration used for the first positioning session.

Receiving the positioning assistance data may further comprise receiving information identifying a set of one or more third devices including the third device and a set of one or more positioning reference units associated with the first positioning session.

Receiving the information identifying the set of one or more third devices including the third device and the set of one or more positioning reference units associated with the first positioning session may comprise receiving information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Receiving the positioning assistance data may further comprise receiving at least one of: one or more performance indicators associated with the first positioning session; an estimated time for the second device to set up the second positioning session; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; and mobility information associated with the third device.

Determining whether the positioning assistance data applies to the second device may comprise: comparing the one or more performance indicators against expected values; or comparing information indicating an area in which the first device is located with information indicating an area in which the second device is located.

Receiving the positioning assistance data may further comprise receiving one or more conditions of when the positioning assistance data can be used by the second device, and wherein establishing the positioning session is performed based on determining that the one or more conditions are satisfied.

The method may comprise: determining that the configuration of the second positioning session comprises a modification to the configuration of the first positioning session; and wherein establishing the second positioning session may comprise sending an indication of the modification to the third device.

According to an aspect there is provided a method comprising: establishing a first positioning session between a third device and a first device; and establishing a second positioning session between the third device and a second device, wherein a configuration of the second positioning session comprises at least part of a configuration of the first positioning session.

The method may comprise: sending, to the first device, a request to provide positioning assistance data to the second device.

The request may comprise an indication in a positioning reference signal.

The method may comprise: receiving, from the first device, a permission request for providing the positioning assistance data to the second device; determining to grant the permission request; and causing, based on the determining, sending, to the first device, a response indicating that the permission request is granted.

Establishing the second positioning session may comprise: receiving, from the second device, an indication of a modification to the configuration of the first positioning session; and establishing the second positioning based on the first positioning session and the indication.

According to an aspect, there is provided a computer readable medium comprising instructions which, when executed by a first device, cause the first device to perform at least the following: establishing a first positioning session between the first device and a third device; and sending, from the first device to a second device, positioning assistance data comprising information associated with a configuration of the first positioning session.

The instructions, when executed by the first device, may cause the first device to further perform: determining that a trigger condition is satisfied, wherein the sending may be performed based on determining that the trigger condition is satisfied.

Determining that the trigger condition is satisfied may comprise receiving, from the third device or the second device, a request for the positioning assistance data.

Determining that the trigger condition is satisfied may comprise receiving, from the second device, the request for the positioning assistance data, and wherein the instructions, when executed by the first device, may cause the first device to further perform: sending, to the third device, a permission request for providing the positioning assistance data to the second device; receiving, from the third device, a response indicating that the permission request is granted; and sending the positioning assistance data based on receiving the response indicating that the permission request is granted.

The information associated with the configuration of the first positioning session may comprise a most recent positioning reference signal configuration used for the first positioning session.

The information associated with the configuration of the first positioning session may comprise information identifying a set of one or more third devices including the third device and a set of one or more positioning reference units associated with the first positioning session. Sending the information identifying the set of one or more third devices including the third device and the set of one or more positioning reference units associated with the first positioning session may comprise sending information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Sending the positioning assistance data may further comprise sending at least one of: one or more performance indicators associated with the first positioning session; an estimated time for the second device to set up a second positioning session based on the positioning assistance information; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; or mobility information associated with the third device.

Sending the positioning assistance data may further comprise sending one or more conditions of when the positioning assistance data can be used by the second device.

According to an aspect, there is provided a computer readable medium comprising instructions which, when executed by a second device, cause the second device to perform at least the following: receiving, at the second device from a first device associated with a first positioning session between the first device and a third device, positioning assistance data comprising information associated with a configuration of the first positioning session; establishing a second positioning session between the second device and the third device based, at least in part, on the positioning assistance data, wherein a configuration of the second positioning session is based, at least in part, on the information associated with the configuration of the first positioning session.

The instructions, when executed by the second device, may cause the second device to further perform: sending, to the first device, a request for providing the positioning assistance data to the second device.

The positioning assistance data may comprise a most recent positioning reference signal configuration used for the first positioning session.

Receiving the positioning assistance data may further comprise receiving information identifying a set of one or more third devices including the third device and a set of one or more positioning reference units associated with the first positioning session.

Receiving the information identifying the set of one or more third devices including the third device and the set of one or more positioning reference units associated with the first positioning session may comprise receiving information indicating whether the set of one or more third devices including the third device and the set of one or more positioning reference units associated with the first positioning session are able to fulfil the same role for the second device.

The information associated with the configuration of the first positioning session may comprise at least one of: information identifying a set of measurements selected by the first device for performing with respect to the first positioning session; or information identifying a set of measurements selected by the first device that resulted in failure of the first positioning session for the first device.

Receiving the positioning assistance data may further comprise receiving at least one of: one or more performance indicators associated with the first positioning session; an estimated time for the second device to set up the second positioning session; an estimated response time for the third device to respond to a request from the second device to set up the second positioning session; a number of retransmissions associated with the first positioning session that the first device has made; a positioning reference signal measurement capability of the first device; information indicating whether inter-device coordination is supported by the third device; and mobility information associated with the third device.

Determining whether the positioning assistance data applies to the second device may comprise: comparing the one or more performance indicators against expected values; or comparing information indicating an area in which the first device is located with information indicating an area in which the second device is located.

Receiving the positioning assistance data may further comprise receiving one or more conditions of when the positioning assistance data can be used by the second device, and wherein establishing the positioning session is performed based on determining that the one or more conditions are satisfied.

The instructions, when executed by the second device, may cause the second device to further perform: determining that the configuration of the second positioning session comprises a modification to the configuration of the first positioning session; and wherein establishing the second positioning session may comprise sending an indication of the modification to the third device.

According to an aspect, there is provided a computer readable medium comprising instructions which, when executed by a third device, cause the third device to perform at least the following: establishing a first positioning session between the third device and a first device; and establishing a second positioning session between the third device and a second device, wherein a configuration of the second positioning session comprises at least part of a configuration of the first positioning session.

The instructions, when executed by the third device, may cause the third device to further perform: sending, to the first device, a request to provide positioning assistance data to the second device.

The request may comprise an indication in a positioning reference signal.

The instructions, when executed by the third device, may cause the third device to further perform: receiving, from the first device, a permission request for providing the positioning assistance data to the second device; determining to grant the permission request; and causing, based on the determining, sending, to the first device, a response indicating that the permission request is granted.

Establishing the second positioning session may comprise: receiving, from the second device, an indication of a modification to the configuration of the first positioning session; and establishing the second positioning based on the first positioning session and the indication.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 illustrates an example sidelink positioning scenario;
Figure 5 shows methods according to some examples; and
Figure 6 shows a method according to some examples.

### DETAILED DESCRIPTION

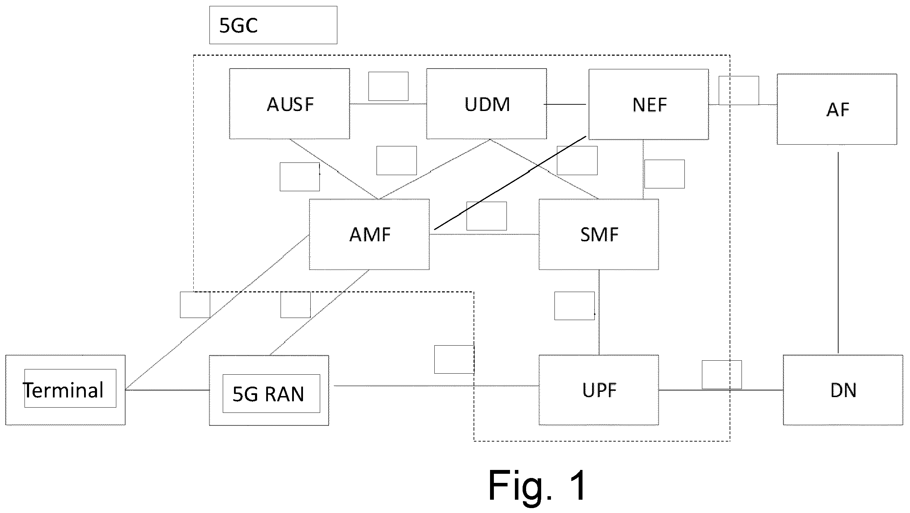

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF).

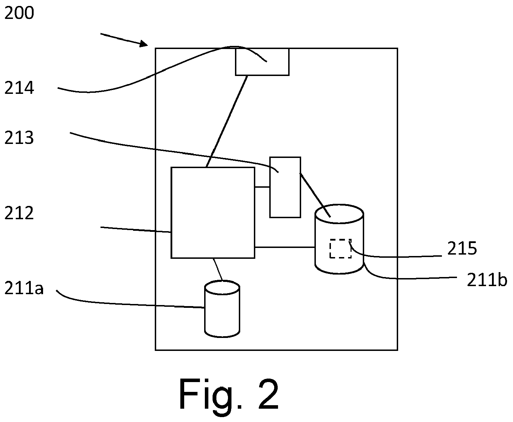

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

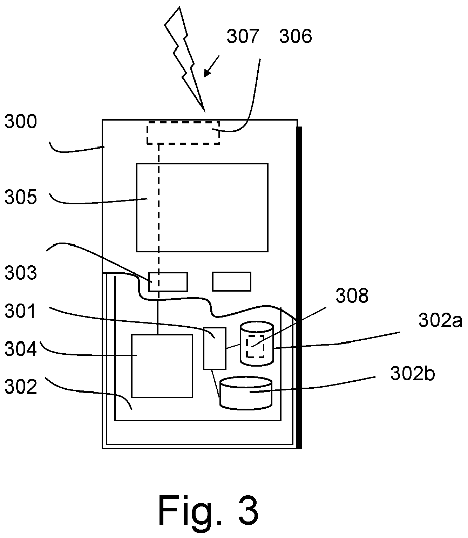

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

Some network deployments may utilise sidelink (SL) communication, which allows direct communication between a first user equipment (UE) and one or more other UEs without going through a base station. Two different resource allocation modes are defined in 3GPP, and a SL transmitter (Tx) UE may be configured with one of them to perform its SL transmissions. These modes are denoted as mode 1 and mode 2.

In mode 1, a sidelink transmission resource is assigned by the network (NW) to the SL Tx UE, while a SL Tx UE in mode 2 autonomously selects its SL transmission resources.

In mode 1, where the network is responsible for the SL resource allocation, the configuration and operation may be similar to the one over the Uu interface. The MAC level details of this procedure are given in section 5.8.3 of TS 38.321.

In mode 2, the SL UEs perform autonomously the resource selection with the aid of a sensing procedure. More specifically, in some examples a SL Tx UE in mode 2 first performs a sensing procedure over the configured SL transmission resource pool(s), in order to obtain the knowledge of the reserved resource(s) by other nearby SL Tx UE(s). Based on the knowledge obtained from sensing, the SL Tx UE may select resource(s) from the available SL resources, accordingly.

In order for a SL UE to perform sensing and obtain the necessary information to receive a SL data transmission, the SL UE may need to decode sidelink control information (SCI). In some examples the SCI associated with a data transmission includes a 1^{st} stage SCI and 2^{nd} stage SCI, for example as discussed in 3GPP TS 38.212.

Some examples of SL communication may use inter-UE coordination schemes to select resources for performing SL transmissions.

In some examples of the mode 2 operation, a receiver (Rx) UE selects a preferred SL transmit resource(s) (e.g., according to its sensing) and recommends the selected resource(s) to the Tx UE, and the Tx-UE selects a SL transmit resource by taking into account the resource(s) indicated by the Rx-UE.

Additionally, the Tx-UE may perform its own sensing and select the SL transmit resource based on its own sensing. For example, the Tx UE may use or may not use the recommended resource(s) to transmit to the Rx-UE.

Thus the Tx-UE may try to ensure there is no packet collision or strong interference over its selected resource(s) and, thus, the transmission from Tx UE to Rx UE can occur with high(er) reliability.

In another example inter-UE coordination scheme, the Rx UE monitors the transmissions taking place in the SL resource pool and every time a collision or half-duplex problem is detected by the Rx UE (either in the past or in future resources) the Rx UE informs the impacted UEs accordingly.

In some examples, SL transmissions may be used to locate a position of one or more UEs as part of a SL positioning session. This may be important in applications such as vehicle to everything (V2X) or industrial internet of things (IIoT), where knowing the location of a device, such as a car or mobile control panel, may be required.

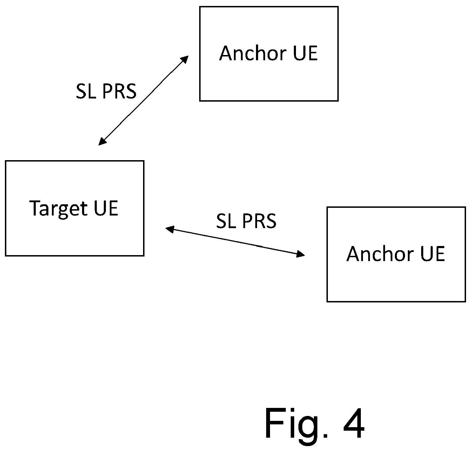

In some examples SL positioning may be based on the transmissions of a SL positioning reference signal (PRS) by one or more anchor UEs to be received by a target UE (or SL-PRS exchange between the anchor and target UEs) to enable localization of the target UE within precise latency and accuracy requirements of the corresponding SL positioning session. Figure 4 illustrates a SL positioning scenario where a target UE is performing SL positioning session i.e., exchanging SL-PRS with two anchors UE in order to determine its location. Here, the anchors are said to provide SL-PRS assistance (incl. SL-PRS) to the target UE.

Positioning requirements for the target UE may be captured via key-performance-indices (KPIs) such as but not limited to:
- *horizontal and vertical accuracy*, where vertical accuracy refers to accuracy in altitude may determine the floor for indoor use cases and may distinguish between superposed tracks for road and rail use cases (e.g. bridges).
- *positioning service availability*: percentage value of the amount of time the positioning service is delivering the required position-related data within the performance requirements, divided by the amount of time the system is expected to deliver the positioning service according to the specification in the targeted service area.
- *positioning service latency*: time elapsed between the event that triggers the determination of the position-related data and the availability of the position-related data at the system interface .
- *time to first fix (TTFF)*: time elapsed between the event triggering for the first time the determination of the position-related data and the availability of the position-related data at the positioning system interface.
- *Update rate*
- *Energy consumption*, etc.

There may be a plurality of different positioning service levels. Different positioning service levels may have different requirements. For example, positioning service level 4 may have a 99.9% availability and 15ms latency requirement, and service level 6 may have a 99.9% availability and 10ms latency requirement.

Some examples of scenarios / use cases of positioning service levels 4 and 6 include:
- Vehicle to anything (V2X) use cases, which may include use cases such as vehicle platooning, cooperative lane merge, lane change warning, emergency break warning, intersection movement assist, etc., high definition sensor sharing, vulnerable road user (VRU) - collision risk warning, cooperative manoeuvers in emergency situations, real-time situation awareness and high-definition maps, etc.
- IloT, including so called "Factories of the Future" scenarios such as augmented reality in smart factories, mobile control panels with safety functions in smart factories (within factory danger zones), inbound logistics for manufacturing (for driving trajectories (if supported by further sensors like camera, GNSS, IMU) of indoor autonomous driving systems)).

Establishing a SL positioning session may include a series of signalling between the involved nodes (i.e. SL UEs). The signalling procedure may include several steps before the positioning session is initiated.

At a high level, such signalling procedure (also referred to herein as a standard setup procedure) may include:
a) Target UE initiating a discovery message for finding the potential devices/nodes in the area that can be used as SL positioning anchors;
b) Anchor UEs indicating their availability to serve as anchors as part of a response to the discovery message; and
c) Target UE and anchor UEs coordinating on the resources utilized for SL positioning purposes.

The above procedure may not be optimized for use cases where a quick setting up of a positioning session is required. For example, in vehicular and/or automated guided vehicles (AGV) applications, it may be important to establish a SL positioning session as quickly as possible to ensure minimal latency between the time the coordinates of a target UE are requested until the time the coordinates are received at the requesting entity (e.g., the target UE in case of a mobile-originated location request - MO-LR).

In addition, the above procedure may not be optimized for use cases where the target UE is an energy-limited device, where the Tx signalling from the target UE as well as the respective processing at target UE must be maintained at minimum levels.

Some examples may address these problems.

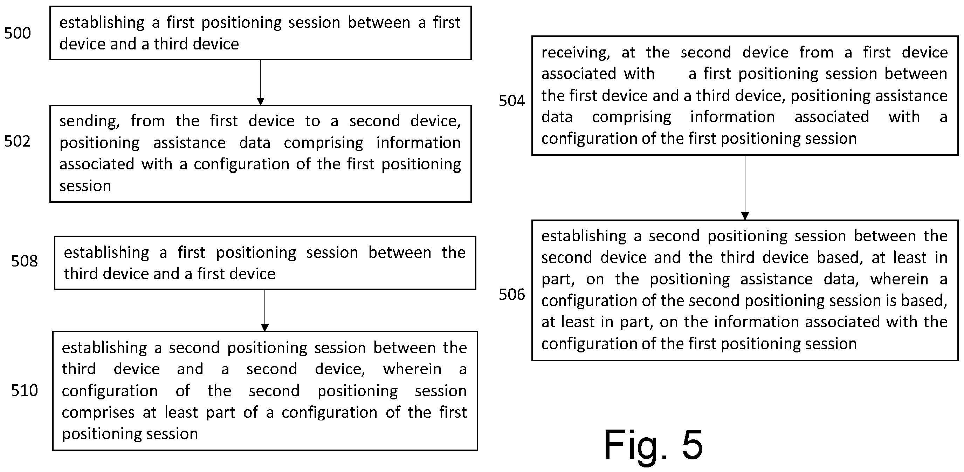

Reference is made to Figure 5, which shows methods according to some examples.

At 500, a method comprises establishing a first positioning session between a first device and a third device.

At 502, the method comprises sending, from the first device to a second device, positioning assistance data comprising information associated with a configuration of the first positioning session.

At 504, a method comprises receiving, at the second device from a first device associated with a first positioning session between the first device and a third device, positioning assistance data comprising information associated with a configuration of the first positioning session.

At 506, the method comprises establishing a second positioning session between the second device and the third device based, at least in part, on the positioning assistance data, wherein a configuration of the second positioning session is based, at least in part, on the information associated with the configuration of the first positioning session.

At 508, a method comprises establishing a first positioning session between the third device and a first device.

At 510, the method comprises establishing a second positioning session between the third device and a second device, wherein a configuration of the second positioning session comprises at least part of a configuration of the first positioning session.

Some examples may allow devices to establish SL positioning sessions in a "fast track" mode, where the time as well as the energy spent on the initialization phase of the positioning session are minimized compared to the standard setup procedure described previously.

Some examples may enable an upcoming target UE (referred to as a peer UE or deer device below) to inherit (partly or totally) the positioning session of another target UE (referred to as a target UE or target device below), where the inheritance scheme relies on interactions between the upcoming target, current target and the anchor device(s) of the current target. In some examples, the positioning session of the target UE may be ongoing or may have recently ended.

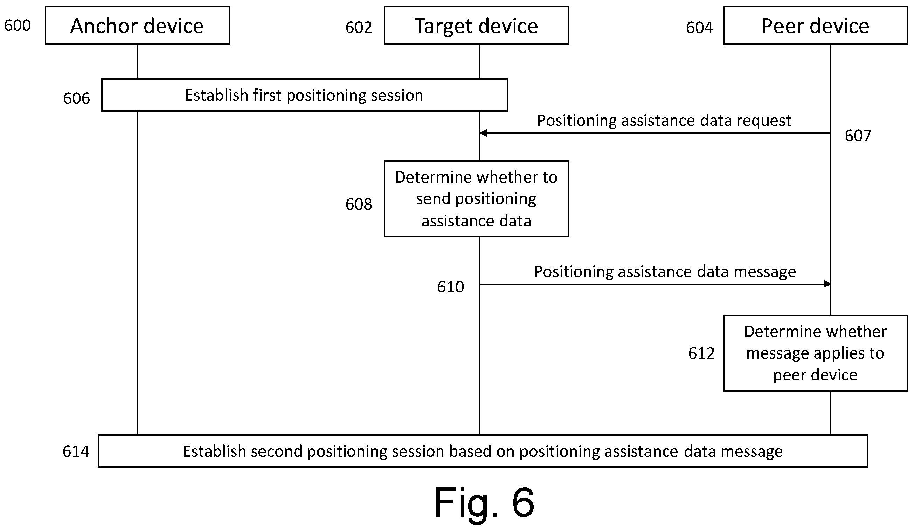

Reference is made to Figure 6, which shows a signalling exchange according to some examples. The signalling exchange of Figure 6 includes a first device which is herein referred to as a target device 602, a second device which is herein referred to as a peer device 604, and a third device, which is herein referred to as an anchor device 600. It should be understood that, for example, any device that performs the functions of the "target" device described below may be considered a first device (and similarly for the second and third devices), and that the labels "target", "peer", and "anchor" may be used interchangeably with "first", "second" and "third" respectively in the description below.

At step 606, the anchor device 600 and target device 602 establish a first positioning session. The positioning session may be a sidelink positioning session. The position session may be established via any suitable means, such as but not limited to the previously described standard setup procedure.

At step 608, the target device 602 determines whether or not to send a message associated with positioning assistance data to the peer device 604. The message may comprise the positioning assistance data. For instance, the message may comprise a fast track SL positioning assistance data (FTAD) message. Accordingly, in some examples, the target device 602 may determine to send the message.

In some examples, the target device 602 may be triggered to send the message associated with the positioning assistance data.

In some examples, the target device 602 may be triggered to send the positioning assistance data by receiving a request message.

For example, as shown in Figure 6 at step 607, the peer device 604 may send a request for positioning assistance data. In other examples, the anchor device 600 may send the request to the target device 602. In further examples, while not shown in Figure 6, a further device, such as a location management function, may send the request to the target device 602. The request may comprise an FTAD request message. For instance, the target device 602 may receive the request (or request message), wherein the request triggers the target device to perform step 608. That is, the target device 602 may, based on the request, initiate determining whether or not to send positioning assistance data. This may mean, for example, that the target device 602 performs step 608 in response to receiving the request from the peer device 604 or from anchor device 600.

In some examples, the anchor device 600 or the further device may include an indication (such as a one-bit indication) in SL-PRS to indicate that the target device 602 is to broadcast or forward the FTAD to the peer device 604.

In some examples, the target device 602, based on or upon receiving the request from the peer device 604 may request the anchor device 600 or the further device for permission to provide the positioning assistance data to the peer device 604. For instance, the target device 602 may request for said permission upon or in response to receiving the request from the peer device 604. The anchor device 600 or further device may respond with an indication of whether or not the target device 602 is permitted to send the positioning assistance data to the peer device 604.

At step 610, the target device 602 sends a message comprising the positioning assistance data. For instance, the target device 602 may send the message comprising the positioning assistance data, when the target device 602 determines to send the message associated with positioning assistance data (see step 608).

In some examples, the positioning assistance data may comprise a configuration of the target device's own SL positioning session. For example, the configuration of the target device's SL positioning session with the anchor device 600. In some examples, the configuration is full configuration or partial configuration. In the former example, a full configuration may be sent. In the latter example, the configuration may comprise one or more parameters, but not all parameters, of the SL positioning session configuration used in a positioning session between the target device 602 and the anchor device 600.

In some examples the positioning assistance data, provided to the peer device 604, may comprise a most recent configuration of the target device's SL positioning session. As exemplified above, such configuration may be full or partial configuration.

In some examples, the target device 602 may send the message comprising the positioning assistance data to all peer UEs in the area. For example, the target device 602 may broadcast the message. For example, the broadcast message could be especially beneficial in case the request (see message at step 607) is received from anchor device 600. For instance, not necessarily limited to the case where the message at step 607 is received from the anchor device 600, the request message at step 607 may indicate that the message at step 610 is to be transmitted as broadcast transmission. In another example, the message at step 607 may indicate to which recipient device(s) the message at step 610 should be sent as unicast or multicast transmission. To summarize, the message at step 607, may indicate at least one of the target recipient device(s) of the message at step 610 or transmission type (broadcast, unicast, multicast).

In some examples, the message sent at step 610 may be unicast or multicast transmission to a dedicated recipient device or set of recipient devices.

In some examples, the target device 602 may include a list of anchor devices as well as the positioning reference units (PRUs) involved in the positioning session in the message sent at step 610. The target device 602 may additionally or alternatively indicate the availability of the anchor device(s) and PRUs to continue to fulfil the same roles for the peer device 604.

In some examples, the message sent at step 610 comprises an indication of one or more performance indicators associated with the positioning session, such as the achieved accuracy and/or positioning integrity level.

In some examples the message sent at step 610 may further comprise information indicating one or more of the following:
- An estimated time for setting-up a fast-track SL positioning session, and/or the average time taken by the anchor device 600 to respond;
- A number of retransmissions the target device 602 conducted;
- The target device's PRS measurement capability;
- Binary information on whether or not inter-UE coordination is supported by the anchor device(s); or
- Mobility information associated with the anchor device(s).

In some examples, the information associated with the configuration of the first positioning session may comprise information identifying a set of measurements selected by the target device for performing with respect to the first positioning session. For example, when the first positioning session is successful, the target device may send information indicating the type of measurement performed on the PRS sent by the anchor device(s).

In some examples, the information associated with the configuration of the first positioning session may comprise information identifying a set of measurements selected by the target device that resulted in failure of the first positioning session for the target device. For example, when the first positioning session is unsuccessful, the target device may indicate to the peer device a type of measurement that resulted in failure of the positioning session, such that the peer device can preferentially avoid using such measurements when establishing the second positioning session.

In some examples the peer device 604 may be a low capability (e.g., Reduced capability, RedCap) device. The peer device 604 may be associated or attached to the target device 602. As an example, the peer device 604 may be a smartwatch with low positioning capabilities, which is associated with a target device 602 which may be a smartphone.

At step 612, the peer device 604 receiving the message at 610 determines whether the received message applies to the peer device 604.

In some examples step 612 may comprise comparing, by the peer device 604, the advertised performance indicators (for example the accuracy and integrity) with predicted performance indicator values determined from the PRS.

In some examples the peer device 604 may assess the applicability of the message received at 610 by comparing the area that the peer device 604 and target device 602 reside in. For example, the peer device may determine whether the peer device and target device are part of the same sidelink (SL) group (for example they have the same SL discontinuous reception configuration), or may check the range from the target device by measuring the received power over the SL connection between the target and peer device.

In some examples, the message received at 610 may include conditions under which the peer device 604 may use the positioning assistance information. The conditions may comprise a minimum SL RSRP threshold and/or maximum distance threshold for the SL RSRP and/or distance, respectively, observed at the peer device 604 with respect to the target device 602. That is to say, the conditions may be configured such that the positioning assistance information is available for use by the peer device when the peer device and target device are close enough to each other, which may be indicated by the SL RSRP being above a certain threshold, or by inferring the separation of the peer and target device based on a SL RSRP measurement and path loss assumptions, and subsequently comparing the inferred distance to a threshold. This may result in peer devices which are closer to the target device being able to use the positioning assistance information since those peer devices and target device may experience similar radio conditions with respect to the anchor device 600.

In some examples the peer device 604 may determine whether to combine positioning assistance data from multiple target devices. For example, the peer device 604 may receive messages from multiple target devices and select a subset of anchor devices based on the information from each individual message, where the subset of anchor devices is associated with best SL RSRP quality.

At step 614, based on (e.g. in response to) a positive determination at 612, the peer device 604 establishes a second positioning session based on the information comprised in the message received at 610. For example, the anchor device may agree to serve the peer device and indicate as such by sending a PRS to the peer device. In some examples the peer device 604 may select one or more anchor devices and associate each anchor device with a PRS (for example using the information of the PRS from the inherited positioning session). In some examples, the peer device may utilise a subset of measurements and/or anchor devices that were used in the first positioning session. In a non-limiting example the first positioning session may be successful when the measurements used for positioning were time of arrival (TOA) measurements from anchor devices 1, 2, 3, 4, 5, and 6, and the peer device 604 may establish a second positioning session using TOA as a measurement and using anchor devices 1, 2 and 3 (i.e. a subset of the anchor devices from the first positioning session).

The second positioning session may comprise a fast track SL positioning session. The second positioning session may inherit some or all of the PRS configuration established for the target device 602. For example, the second positioning session may utilize the configuration provided by the target device 602 as is. In some examples, configurations for the first and second positioning sessions may be identical or at least substantially the same. In another example, the second positioning session may utilize at least part of the configuration provided by the target device. For instance, peer device 604 may determine a modified configuration based on the configuration received from the target device in message 610, wherein the modified configuration is to be used for the second positioning session.

In some examples the fast track SL positioning session may be established with the set of anchor devices and PRUs advertised by the target node 602 as part of step 610.

In some examples, the peer device 604 may send, to the anchor device 604 (and any other anchor devices) or the further device a request to modify the PRS configuration(s) established for the target device 602 when establishing the fast track SL positioning session for the peer device 604. The request may comprise an indication for the reason for such modification, such as the peer device 604 having different measurement capabilities than the target device 602, or the peer device 604 having difference energy availability than the target device 602. The difference may be expressed by means of "delta" value of the PRS for the peer device 604 compared to the previously configured PRS for the target device 602.

In some examples the peer device 604 may indicate to the anchor device 600 or the further device that establishment of fast SL positioning with the anchor device 600 is based on the positioning assistance information received from the target device 602. This may allow the anchor device 600 or further device to decide on further optimization of its SL-PRS transmissions, for example transmission of SL-PRS configuration updates in a groupcast manner (instead of unicast) to the target device 602 and peer device 604.

Thus some examples may result in a second device (peer device) establishing a sidelink positioning session with an anchor device, where the session inherits at least part of a previously established positioning session established between the anchor device and a first device (target device).

Some examples may therefore reduce overhead (both in terms of power consumption and spectra) during establishment of SL positioning session with an anchor device. This may be particularly beneficial in V2X applications for devices involved in vehicular and/or automated guided vehicles (AGV) applications where a SL positioning session should be established as quickly as possible to account for minimal latency between the time the coordinates of a target UE are requested until the time the coordinates are received at the requesting entity (e.g., the target device in case of a mobile-originated location request - MO-LR). The mechanisms described above may also be particularly beneficial when applied to I loT applications for target devices that are energy-limited, where the Tx signaling from the target device as well as the respective processing at target device must be maintained at minimum levels. However, it should be understood that the examples described above may be implemented and be beneficial in devices other than V2X and IIoT applications.
In some examples, there is provided a first device comprising: means for establishing a first positioning session between the first device and a third device; and means for causing sending, from the first device to a second device, positioning assistance data comprising information associated with a configuration of the first positioning session.

In some examples, there is provided a first device comprising at least one processor and at least one memory storing instructions that, when executed by the at least one processor, cause the first device at least to: establish a first positioning session between the first device and a third device; and send, from the first device to a second device, positioning assistance data comprising information associated with a configuration of the first positioning session.

In some examples, there is provided a second device comprising: means for causing receiving, at the second device from a first device associated with a first positioning session between the first device and a third device, positioning assistance data comprising information associated with a configuration of the first positioning session; means for establishing a second positioning session between the second device and the third device based, at least in part, on the positioning assistance data, wherein a configuration of the second positioning session is based, at least in part, on the information associated with the configuration of the first positioning session.

In some examples, there is provided a second device comprising at least one processor and at least one memory storing instructions that, when executed by the at least one processor, cause the second device at least to: receive, at the second device from a first device associated with a first positioning session between the first device and a third device, positioning assistance data comprising information associated with a configuration of the first positioning session; establish a second positioning session between the second device and the third device based, at least in part, on the positioning assistance data, wherein a configuration of the second positioning session is based, at least in part, on the information associated with the configuration of the first positioning session.

In some examples, there is provided a third device comprising: means for establishing a first positioning session between the third device and a first device; and means for establishing a second positioning session between the third device and a second device, wherein a configuration of the second positioning session comprises at least part of a configuration of the first positioning session.

In some examples, there is provided a third device comprising at least one processor and at least one memory storing instructions that, when executed by the at least one processor, cause the third device at least to: means for establishing a first positioning session between the third device and a first device; and means for establishing a second positioning session between the third device and a second device, wherein a configuration of the second positioning session comprises at least part of a configuration of the first positioning session.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. A first device comprising:
means for establishing a first positioning session between the first device and a third device; and
means for causing sending, from the first device to a second device, positioning assistance data comprising information associated with a configuration of the first positioning session,
wherein the information associated with the configuration of the first positioning session comprises a most recent positioning reference signal configuration used for the first positioning session.

2. The first device of claim 1, wherein the first device comprises:
means for determining that a trigger condition is satisfied,
wherein causing the sending is performed based on determining that the trigger condition is satisfied.

3. The first device of claim 2, wherein the means for determining that the trigger condition is satisfied comprises means for causing receiving, from the third device or the second device, a request for the positioning assistance data.

4. The first device of claim 2, wherein the means for determining that the trigger condition is satisfied comprises means for causing receiving, from the second device, the request for the positioning assistance data, and wherein the first device further comprises:
means for causing sending, to the third device, a permission request for providing the positioning assistance data to the second device;
means for causing receiving, from the third device, a response indicating that the permission request is granted; and
means for causing sending the positioning assistance data based on receiving the response indicating that the permission request is granted.

5. The first device of any of claims 1 to 4, wherein the information associated with the configuration of the first positioning session comprises information identifying a set of one or more third devices including the third device and a set of one or more positioning reference units associated with the first positioning session.

6. The first device of claim 5, wherein causing sending the information identifying the set of one or more third devices including the third device and the set of one or more positioning reference units associated with the first positioning session comprises causing sending information indicating whether the set of one or more third devices including the third device and the set of one or more positioning reference units associated with the first positioning session are able to fulfil the same role for the second device.

7. The first device of any of claims 1 to 6, wherein the information associated with the configuration of the first positioning session comprises at least one of:
information identifying a set of measurements selected by the first device for performing with respect to the first positioning session; or
information identifying a set of measurements selected by the first device that resulted in failure of the first positioning session for the first device.

8. The first device of any of claims 1 to 7, wherein causing sending the positioning assistance data further comprises causing sending at least one of:
one or more performance indicators associated with the first positioning session;
an estimated time for the second device to set up a second positioning session based on the positioning assistance information;
an estimated response time for the third device to respond to a request from the second device to set up the second positioning session;
a number of retransmissions associated with the first positioning session that the first device has made;
a positioning reference signal measurement capability of the first device;
information indicating whether inter-device coordination is supported by the third device; or
mobility information associated with the third device.

9. The first device of any of claims 1 to 8, wherein causing sending the positioning assistance data further comprises causing sending one or more conditions of when the positioning assistance data can be used by the second device.

10. A second device comprising:
means for causing receiving, at the second device from a first device associated with a first positioning session between the first device and a third device, positioning assistance data comprising information associated with a configuration of the first positioning session;
means for establishing a second positioning session between the second device and the third device based, at least in part, on the positioning assistance data, wherein a configuration of the second positioning session is based, at least in part, on the information associated with the configuration of the first positioning session,
wherein the positioning assistance data comprises a most recent positioning reference signal configuration used for the first positioning session.

11. The second device of claim 10, wherein the second device comprises:
means for causing sending, to the first device, a request for providing the positioning assistance data to the second device.

12. The second device of any of claims 10 to 11, wherein causing receiving the positioning assistance data further comprises causing receiving information identifying a set of one or more third devices including the third device and a set of one or more positioning reference units associated with the first positioning session.

13. The second device of any of claims 10 to 12, wherein the second device comprises:
means for determining that the configuration of the second positioning session comprises a modification to the configuration of the first positioning session; and
wherein establishing the second positioning session comprises causing sending an indication of the modification to the third device.

14. A third device comprising:
means for establishing a first positioning session between the third device and a first device; and
means for establishing a second positioning session between the third device and a second device, wherein a configuration of the second positioning session comprises at least part of a configuration of the first positioning session.

15. The third device of claim 14, wherein the third device comprises:
means for causing receiving, from the first device, a permission request for providing the positioning assistance data to the second device;
means for determining to grant the permission request; and
means for causing, based on the determining, sending, to the first device, a response indicating that the permission request is granted.
